**Europäisches Patentamt**

**European Patent Office**

**Office européen des brevets**

(11) Veröffentlichungsnummer: **0 084 181**

**A1**

# (12) EUROPÄISCHE PATENTANMELDUNG

(21) Anmeldenummer: **82112103.5**

(22) Anmeldetag: **29.12.82**

(51) Int. Cl.³: **B 65 G 13/07**

(30) Priorität: **18.01.82 DE 3201303**

(43) Veröffentlichungstag der Anmeldung:
**27.07.83 Patentblatt 83/30**

(84) Benannte Vertragsstaaten:
**BE DE FR GB IT SE**

(71) Anmelder: **Liebherr-Verzahntechnik GmbH
Postfach 1960
D-8960 Kempten(DE)**

(72) Erfinder: **Weiss, Raphael
Parkstrasse 55
D-8960 Kempten(DE)**

(74) Vertreter: **Kador . Klunker . Schmitt-Nilson . Hirsch
Corneliusstrasse 15
D-8000 München 5(DE)**

(54) Friktionsrollentransportbahn.

(57) Es wird eine neue Art des Antriebes einer Friktions-Rollen-Transportbahn offenbart. Die die Transportrollen (12) tragenden Rollenantriebswellen (14) sind mit ersteren fest verbunden. Der Friktionsantrieb findet durch einen Friktionsriemen statt, der mit seiner einen Seite (28) geringen Reibungswiderstandes eine auf der Rollenantriebswelle (14) fest sitzende Riemenscheibe (24) antreibt und über seine andere flache Seite mit höherem Reibungskoeffizienten von einer auf einer Hauptantriebswelle (30) fest sitzenden zweiten Riemenscheibe angetrieben wird. Zwei weitere, freilaufende Riemenscheiben (34, 36) führen den Riemen zurück. Eine davon (34) ist zur Einstellung der Spannung des Riemens (26) verstellbar. Die Anordnung aus Hauptantriebswelle, den jeweiligen Riemenrädern und den jeweiligen Riemen befindet sich in einem an vier Seiten abgeschlossenen (8, 38) Gehäuse mit abnehmbarer Abdeckung (38), so daß die Anordnung vor schädlichen Umwelteinflüssen geschützt, aber leicht zugänglich ist. Die der Friktion und dem Antrieb der jeweiligen Rollenantriebswellen dienenden Riemen sind leicht und kostengünstig auszuwechseln.

./...

-1-

B e s c h r e i b u n g

Die Erfindung betrifft eine Friktions-Rollen-Transportbahn
mit Transportrollen, die von einem Antriebssystem in Drehung
versetzbar sind, wobei im Kraftübertragungswege vom Antriebssystem zu den einzelnen Transportrollen jeweils eine kraftschlüssige Kraftübertragung vorgesehen ist derart, daß die
Transportrollen einzeln unter Überwindung des Kraftschlusses bei weiterlaufendem Antriebssystem anhaltbar sind.

Die Verkettung durch Friktionsrollensysteme wird seit langem
mit Vorteil für die lose Verkettung einzelner Fertigungseinrichtungen in Herstellungsbetrieben verwandt. Bei herkömmlichen Friktions-Rollen-Transportbahnen sind in die Transportrollen (die daher auch Friktionsrollen genannt werden)
Friktionsbuchsen eingepreßt, die auf zentral angetriebenen
Antriebswellen lose gelagert sind. Diese Rollenantriebswellen sind quer zur Bewegungsrichtung der zu transportierenden Werkstücke oder Paletten in dem Tragrahmen gelagert.
Durch die Belastung der Transportrolle durch das Gewicht
der Palette und/oder des Werkstückes wird zwischen Rollenantriebswelle und Friktionsbuchse ein Reibschluß hergestellt, der das Drehmoment der Rollenantriebswelle auf die zugehörige Transportrolle überträgt.

Die einzelnen Rollenantriebswellen werden von einem Antriebssystem, regelmäßig einem Motor, gemeinsam angetrieben. Dies
findet über eine Antriebskette statt, die alle Rollenantriebswellen gemeinsam antreibt.

Die bisherigen Friktionsrollenbänder sind insbesondere deshalb verbesserungsbedürftig, weil bei den üblichen Friktionsrollenbändern relativ aufwendig hergestellte Bronze- bzw. Sinterbronzelager verwendet werden, bei denen in jedem Fall eine bestimmte Toleranz eingehalten werden mußte. Nachträgliche Justierungen sind nicht möglich.

Das Auswechseln der Buchsen ist mit erheblichem Aufwand verbunden, da sie aus den Transportrollen entfernt werden müssen, wozu und wodurch meist die ganze Anlage stillgelegt werden muß.

Unter "Transportrolle" im Sinne dieser Beschreibung sollen beispielsweise auch zwei in einer Achse, beispielsweise an den beiden Außenrändern des Transportweges, liegende, durch eine gemeinsame Antriebswelle angetriebene Transportrollen oder mehrere derartige Transportrollen verstanden werden.

Ferner ist es bei den herkömmlichen Friktionsrollenbändern nicht möglich, diese an unterschiedliche Umgebungsbedingungen, wie Trocken- oder Naßlauf, anzupassen. Auch ist die Größe der Friktionskraft, was insbesondere bei Abnutzung oder Fehleinbau erwünscht wäre, nicht einstellbar.

Der gemeinsame Antrieb der Rollenantriebswellen durch eine Kette führt zu einem Aufsummieren der Antriebskräfte aller hintereinander geschalteten Wellen, was zu einem erheblichen Verschleiß führt.

Zusätzlich zur Mühe des jeweiligen Auswechselns sind die Verschleißelemente noch verhältnismäßig teuer.

Die Erfindung löst diese Probleme dadurch, daß die kraftschlüssige Kraftübertragung jeweils durch einen Riemen erfolgt.

Riemenantriebe an sich sind bekannt. Auch der Antrieb durch Friktionsriemen ist aus dem Textilbereich bekannt, wo Spindeln durch entsprechende Riemen angetrieben werden. Dennoch wurden Friktionsriemen nach Kenntnis der Anmelderin bislang nicht für Friktions-Rollen-Transportbänder verwendet, trotz der erheblichen Vorteile. Diese liegen insbesondere darin, daß sich die Riemen, insbesondere bei entsprechender Anordnung, leicht auswechseln lassen. Die Friktionskraft ist einstell- und nachstellbar. Der Riemenantrieb läßt sich so vom Transportweg trennen, daß er beispielsweise in einem abgeschlossenen Raume unterbringbar ist, so daß er unterschiedlichen Umgebungsbedingungen wie Trocken- oder Naßlauf entzogen ist. Die Kosten der Riemen als Verschleißelemente sind sehr niedrig (ca. 1 DM), wobei der besondere Vorteil vorliegt, daß sie sowohl die Friktionsbuchsen wie den Kettenantrieb ersetzen können.

Dadurch, daß für jede Rollen-Antriebswelle jeweils ein Riemen vorgesehen ist, kann die Schleppkraft durch Änderung der jeweiligen Riemenspannung über die Länge des Transportbandes unterschiedlich eingestellt oder, wie erwähnt, nachjustiert werden, so daß eine Anpassung an geänderte Produktionsbedingungen ohne Schwierigkeit möglich ist.

Bevorzugt ist der Riemen außerhalb des die Transportrolle tragenden Tragrahmens angeordnet. Dies hat insbesondere den Vorteil, daß der Riemen ausgewechselt werden kann, ohne daß die Transportrolle bzw. die sie antreibende Rollenantriebswelle aus ihrer Lagerung herausgenommen werden muß; daher können einzelne Riemen ausgewechselt oder nachgestellt werden, ohne daß es erforderlich ist, die Anlage anzuhalten.

Bevorzugt greift der Riemen an einer Rollenantriebswelle an, die starr mit seiner zugehörigen Transportrolle verbunden ist. Da die kraftschlüssige Antriebskraftübertragung jetzt durch den Riemen übernommen wird, kann die Rollenantriebswelle starr mit der jeweiligen Transportrolle verbunden sein, was den Aufbau erheblich vereinfacht. Dabei wird der Gesamtaufbau weiter dadurch vereinfacht, daß der Riemen direkt an der Rollenantriebswelle angreift (obwohl es denkbar wäre, daß er an anderer Stelle im Kraftübertragungswege angeordnet ist). Dies wird zweckmäßig über eine auf der Rollenantriebswelle sitzende Riemenscheibe (Riemenrad) geschehen, obwohl der Riemen beispielsweise auch in eine Umfangsnut der Welle eingreifen kann.

Bevorzugt treibt das Antriebssystem eine den Transportrollen gemeinsame, zur Längserstreckung der Transportbahn im wesentlichen parallele, Hauptantriebswelle an, die Antriebe für die Riemen aufweist.

Hierdurch ist es möglich, die Antriebskraft den Transportrollen auf einfache Weise zuzuführen, wobei die Einzelübertragung von der Hauptantriebswelle auf die Rollenantriebswellen jeweils durch die Riemen erfolgen kann. Die Antriebe für die Riemen werden dabei ebenfalls normalerweise als Antriebs-Riemenscheiben gewählt. Diese Riemenscheiben sind vorzugsweise die gleichen wie auf der Rollenantriebswelle verwendeten Antriebsriemenscheiben, mit dem Vorteil, daß mehr gleichartige Teile verwendet werden und somit die Lagerhaltung einfacher wird. Die Riemen können aber auch direkt auf der Welle laufen.
Bevorzugt ist eine weitere Führungseinrichtung zur Führung des Riemens vorgesehen. Diese weitere Führungseinrichtung erleichtert die Führung des Riemens aus der Drehebene der

Hauptantriebswelle in die Drehebene der Rollenantriebswelle. Bevorzugt weist die Führungseinrichtung ein auf der Hauptantriebswelle angeordnetes erstes freilaufendes Riemenrad und ein etwa in der Achse der Rollenantriebswelle liegendes, zweites freilaufendes Riemenrad auf. Dadurch läßt sich eine besonders elegante und einfache Führung des Riemens erreichen. Die beiden freilaufenden Riemenräder können ebenfalls von gleicher Art wie die ggfs. auf den Wellen vorgesehenen Riemenräder sein, so daß sich die Ersatzteil-Lagerhaltung vereinfacht. Die freilaufenden Riemenscheiben sind vorzugsweise kugelgelagert. Alle Riemenscheiben können entweder mit seitlichen Stegen oder Flanschen versehen sein, um den Riemen auf ihnen zu zentrieren oder sie sind am Umfang ballig ausgebildet, um eine Zentrierung des Riemens zu erreichen.

Bevorzugt ist der Kraftschluß zwischen Riemen und An- bzw. Abtrieb unterschiedlich groß. Dadurch lassen sich definiertere Verhältnisse erzielen und insbesondere festlegen, ob An- oder Abtriebsscheibe jeweils gegenüber dem Riemen beim Anhalten der Transportrolle schlüpfen soll.

Besonders bevorzugt ist der Kraftschluß zwischen Riemen und Abtrieb kleiner als zwischen Riemen und Antrieb. Wenn der Kraftschluß zwischen Riemen und Abtrieb (also rollenseitig) kleiner ist, bleibt bei einem Anhalten der Rolle durch das Anhalten des zu transportierenden Gutes der Abtrieb (die Abtriebsriemenscheibe) gegenüber dem Riemen stehen, der seinerseits weiterläuft. Dadurch wird eine gleichmäßige Abnutzung des Riemens bei einem solchen Stillstand erreicht; bliebe der Riemen mit dem Abtriebsriemenrad stehen und schlüpfte das Antriebsriemenrad durch, so würde der Riemen bei diesem Stillstand stets nur an einer Stelle abgenutzt.

Besonders bevorzugt steht die eine, flächige Seite des Riemens mit dem Abtrieb und die andere flächige Seite des Riemens mit dem Antrieb in Eingriff. Dies bietet eine besonders günstige Möglichkeit, den Kraftschluß zwischen Riemen einerseits und An- bzw. Abtrieb andererseits zu steuern.

Es sei angemerkt, daß als Riemen zwar bevorzugt ein Gebilde mit flachem Querschnitt verwendet wird, jedoch bei Ausführungsformen der Erfindung, bei denen es nicht auf unterschiedliche Seiten des Riemens ankommt, natürlich auch Riemen mit kreisförmigem Querschnitt verwendet werden können.

Bevorzugt weisen die flächigen Seiten des Riemens einen unterschiedlichen Reibungskoeffizienten auf. Dies hat insbesondere in Verbindung mit dem Merkmal, daß unterschiedliche Seiten mit An- und Abtrieb in Verbindung stehen, den Vorteil, daß die jeweiligen Antriebs- bzw. Abtriebsscheiben gleich ausgebildet sein können, und dennoch ein unterschiedlicher Reibschluß zwischen Riemen und An- bzw. Abtrieb erreicht werden kann.

Hierzu sind besonders bevorzugt die flächigen Seiten unterschiedlich beschichtet. Derartige Riemen werden im Textilbereich verwendet und sind daher einfach zu erhalten.

Bevorzugt ist eine Einrichtung zum Spannen des Riemens vorgesehen. Dadurch läßt sich der Kraftschluß zwischen Riemen und An- und Abtrieb für jeden Riemen verändern, so daß die Schleppkraft über die Bandlänge unterschiedlich eingestellt oder entsprechend nachjustiert werden kann. Dadurch ist die Anlage ohne Schwierigkeiten an die geänderten Produktionsbedingungen anpaßbar.

Bevorzugt ist die Einrichtung zum Spannen des Riemens ein
Rostastab bzw. ein Rostaelement. Diese haben sich hierfür
bewährt. Besonders bevorzugt ist durch das Rostaelement
ein ungefähr in der Achse der Rollenantriebswelle liegendes Riemenrad verstellbar. Dieses wird zweckmäßig das oben
erwähnte weitere freilaufende Riemenrad sein.


Nachfolgend wird die Erfindung unter Bezugnahme auf die beigefügten Zeichnungen, auf die wegen ihrer großen Klarheit
und Übersichtlichkeit bezüglich der Offenbarung ausdrücklich verwiesen wird, noch näher erläutert.

Es zeigen:

Fig. 1    eine teilweise geschnittene (längs der Linie
          I-I in Fig. 2, in Pfeilrichtung) Ansicht einer
          bevorzugten Ausführungsform der Erfindung;

Fig. 2    eine Seitenansicht der Transportbahn aus Fig. 1,
          unter Weglassung der Abdeckung, und

Fig. 3    eine Aufsicht auf die Transportbahn aus Fig. 1

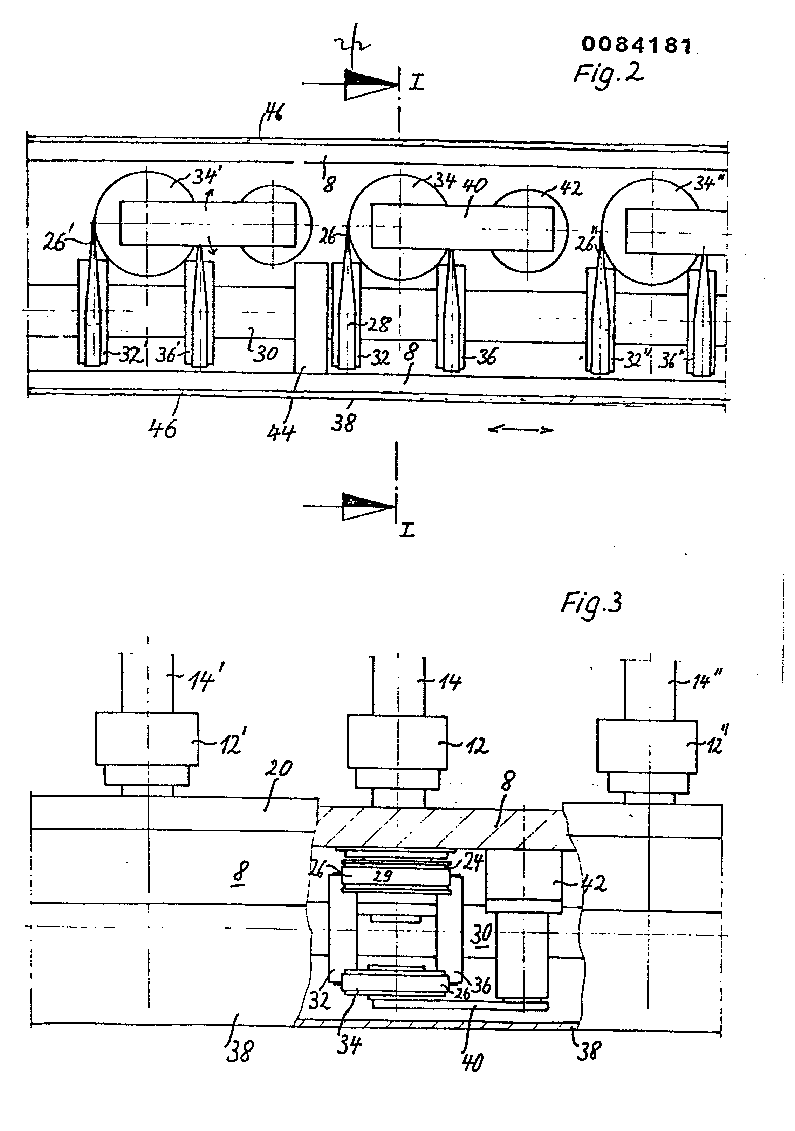

          und Fig. 2, wobei Teile weggebrochen und Teile
          geschnitten sind.

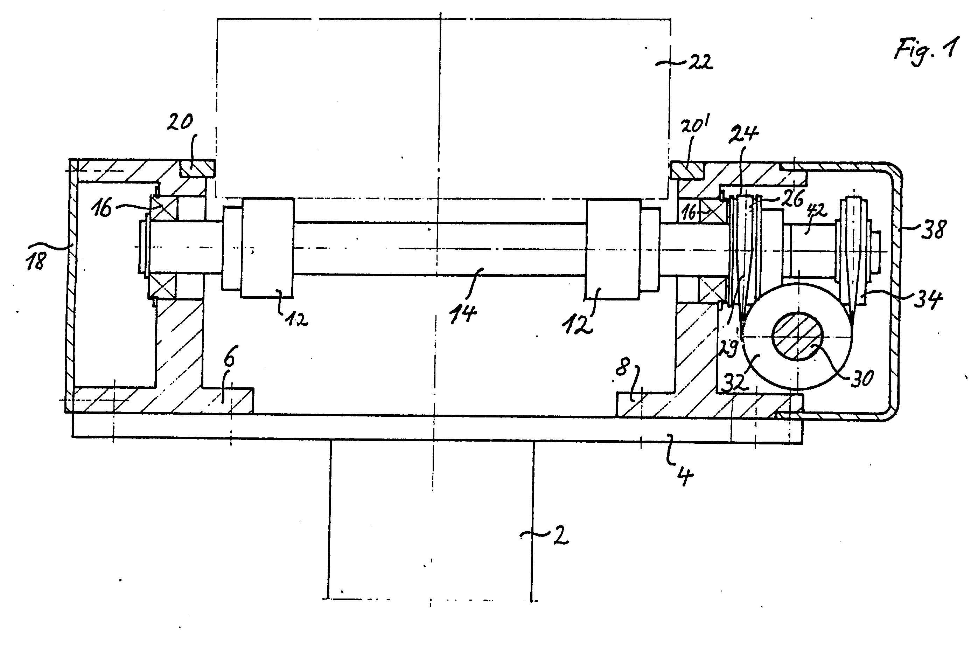

In Fig. 1 ruht auf einem Sockel 2 ein Träger 4, der seinerseits die voneinander beabstandeten linken 6 und rechten 8
Teile des Tragrahmens der Transportrollenbahn trägt. Die
Transportrolle 12 besteht aus zwei einander entsprechenden und mit gleichen Bezugszeichen versehenen Rollenelementen, die jeweils am Rande der Transportbahn auf einer
Rollenantriebswelle drehfest angebracht sind. Die Rollenantriebswelle 14 ruht ihrerseits drehbar in Lagern 16, die von den Teilen 6 bzw. 8 des Tragrahmens gehalten werden. Der (in Fig. 1) linke Teil des Tragrahmens wird durch eine Abschlußplatte 18 abgeschlossen. In den durch die Teile des Tragrahmens 6, 8 vertikal begrenzten Raum ragen etwas oberhalb der durch die Transportrollen 12 gebildeten Fläche seitliche Führungschienen 20, 20', die zur seitlichen Führung einer (nur in Umrissen angedeuteten) Palette 22 dienen.

Die Rollenantriebswelle 14 ragt durch ihr (in Fig. 1) rechtes Lager in den durch den oberen und unteren seitlichen Arm des C-förmig ausgebildeten Tragrahmenteils 8 gebildeten Raum hinein. Auf der Rollenantriebswelle 14 sitzt außerhalb des Tragrahmens (d.h. also: des durch die Teile des Tragrahmens zwischen ihnen eingeschlossenen Raumes), aber innerhalb des durch die Schenkel des rechten Tragrahmenteils 8 gebildeten Raumes,/ein drehfest mit der Rollenantriebswelle verbundenes Abtriebsrad 24 für den es umschlingenden Riemen 26. Der flache Riemen liegt mit seiner einen, nicht sichtbaren Seite 28 auf der Riemenscheibe auf und umschlingt unter Drehung um 90° eine zweite Riemenscheibe 32. Diese Riemenscheibe sitzt auf einer vom Antriebssystem der Rollenbahn angetriebenen Welle 30, die sich, in einer unterhalb der Horizontalebene der Rollenantriebswelle 14 gelegenen Horizontalebene, senkrecht zur Rollenantriebswelle 14 erstreckt. Somit berührt der Riemen 26 mit seiner zweiten Seite 29 die zweite Riemenscheibe 30.

Nach der unteren Umschlingung der Riemenscheibe 32 erstreckt sich der Riemen 26 wieder nach oben und umschlingt von unten nach oben unter Drehung um 90° um seine Längsachse eine dritte Riemenscheibe 34. Diese berührt der Riemen 26 somit mit seiner Seite 28. Die Riemenscheibe 34 liegt mit ihrer Achse ungefähr auf der Höhe der Riemenscheibe 24, ist jedoch lose, also freilaufend und, wie noch erläutert werden wird, in der Höhe verstellbar.

Eine Abdeckung 38 schließt (in Fig. 1) seitlich an die Stege des Teils 8 des Tragrahmens an, so daß der den Riemen und die Riemenscheiben enthaltende Raum an vier zur Ebene der Fig. 1 senkrechten Seiten völlig abgeschlossen und damit von nachteiligen Umwelteinflüssen weitgehend befreit ist.

In Fig. 2 ist die Transportbahn der Fig. 1 von der Seite, nach abgenommener Abdeckung 38, zu sehen. Die Längserstrekkung der Transportbahn ist somit in Fig. 2 horizontal. Weitere, den schon geschilderten Elementen entsprechende Elemente für benachbarte Transportrollen und deren Antrieb in der Rollenbahn sind mit den gleichen Bezugszeichen, jedoch gestrichen bzw. zweigestrichen, versehen.

Aus Fig. 2 wird ersichtlich, daß die Riemenscheibe 34 (ebenso wie die Riemenscheiben 34' und 34") durch ein sog. Rosta-Element 40, 42 getragen wird. Der Tragarm 40 ist um die Achse des Teiles 42 schwenkbar und ermöglicht damit eine Höhenverstellung der Riemenscheibe 34, wodurch der Riemen unterschiedlich gespannt bzw. nachgespannt werden kann. In Fig. 2 ist auch eine, in Fig. 1 verdeckte, weitere Riemenscheibe 36 (36', 36") zu erkennen, diese Riemenscheibe läuft kugelgelagert frei auf der Hauptantriebswelle 30 und wird ebenso wie die Riemenscheibe 32 nach oben offen vom Riemen 26 umschlungen.

Die Welle 30 wird von beabstandeten Stützen 44 drehbar gelagert.

Im rechten Teil 8 des Tragrahmens sind oben und unten Ausklinkungen 46 zum dichtenden Anschluß der Abdeckung 38 erkennbar.

In Fig. 3 sind die geschilderten Teile noch einmal in Aufsicht gezeigt, hierbei ist noch besser zu erkennen, wie die Riemenscheibe 34 mittels des Tragarmes 40 schwenkbar vom Element 42 getragen wird und wie der Riemen 26 um die vier Riemenscheiben geführt ist.

Es wird insbesondere erkennbar, daß der (axiale) Zwischenraum zwischen den beiden zu der Achse der Rollenantriebswelle liegenden Riemenscheibe ein leichtes Anbringen eines endlosen Riemens ohne Lösen irgendwelcher Elemente ermöglicht.

Ende der Beschreibung

Liebherr-Verzahntechnik GmbH

8916 Kempten

---

Friktionsrollentransportbahn

---

P a t e n t a n s p r ü c h e

1. Friktions-Rollen-Transportbahn mit Transportrollen (12,
12', 12"), die von einem Antriebssystem in Drehung versetzbar sind, wobei im Kraftübertragungswege vom Antriebssystem
zu den einzelnen Transportrollen jeweils eine kraftschlüssige Kraftübertragung vorgesehen ist derart, daß die Transportrollen einzeln unter Überwindung des Kraftschlusses bei weiterlaufendem Antriebssystem anhaltbar sind, d a d u r c h
g e k e n n z e i c h n e t , daß die kraftschlüssige

Kraftübertragung jeweils durch einen Riemen (26, 26', 26") erfolgt.

2. Friktions-Rollen-Transportbahn nach Anspruch 1, dadurch gekennzeichnet, daß der Riemen (26, 26', 26") außerhalb des die Transportrolle (12, 12', 12") tragenden Tragrahmens (6, 8) angeordnet ist.

3. Friktions-Rollen-Transportbahn nach Anspruch 1 oder 2, dadurch gekennzeichnet, daß der Riemen (26, 26', 26") an einer Rollenantriebswelle (14, 14', 14") angreift (24, 24', 24"), auf der die Transportrollen (12, 12', 12") drehfest angeordnet sind.

4. Friktions-Rollen-Transportbahn nach einem der Ansprüche 1 bis 3, dadurch gekennzeichnet, daß das Antriebssystem eine den Transportrollen (14, 14', 14") gemeinsame, zur Längserstreckung der Transportbahn im wesentlichen parallele, Hauptantriebswelle (30) aufweist, die Antriebe (32, 32', 32") für die Riemen (26, 26', 26") aufweist.

5. Friktions-Rollen-Transportbahn nach Anspruch 4, dadurch gekennzeichnet, daß eine weitere Führungseinrichtung (34, 36; 34', 36'; 34", 36") zur Führung des Riemens (26, 26', 26") vorgesehen ist.

6. Friktions-Rollen-Transportbahn nach Anspruch 5, dadurch gekennzeichnet, daß die Führungseinrichtung ein auf der Hauptantriebswelle (30) angeordnetes erstes freilaufendes Riemenrad (36, 36', 36") und ein etwa in der Achse der Rollenantriebswelle (14, 14', 14") liegendes, zweites freilaufendes Riemenrad (34, 34', 34") aufweist.

7. Friktions-Rollen-Transportbahn nach einem der vorhergehenden Ansprüche, dadurch gekennzeichnet, daß der Kraftschluß zwischen Riemen (26, 26', 26") und An(32, 32', 32")- bzw. Abtrieb (24, 24', 24") unterschiedlich groß ist.

8. Friktions-Rollen-Transportbahn nach Anspruch 7, dadurch gekennzeichnet, daß der Kraftschluß zwischen Riemen (26, 26', 26") und Abtrieb (24, 24', 24") kleiner ist als zwischen Riemen und Antrieb (32, 32', 32").

9. Friktions-Rollen-Transportbahn nach einem der vorhergehenden Ansprüche, dadurch gekennzeichnet, daß die eine flächige Seite (28) des Riemens (26, 26', 26") mit dem Abtrieb (24, 24', 24") und die andere flächige Seite (29) des Riemens mit dem Antrieb (32, 32', 32") in Eingriff steht.

10. Friktions-Rollen-Transportbahn nach einem der vorhergehenden Ansprüche, dadurch gekennzeichnet, daß die flächigen Seiten (28, 29) des Riemens (26, 26', 26") einen unterschiedlichen Reibungskoeffizienten aufweisen.

11. Friktions-Rollen-Transportbahn nach Anspruch 10, dadurch gekennzeichnet, daß die flächigen Seiten (28, 29) unterschiedlich beschichtet sind.

12. Friktions-Rollen-Transportbahn nach einem der vorhergehenden Ansprüche, dadurch gekennzeichnet, daß eine Einrichtung (34, 40, 42) zum Spannen des Riemens (26, 26', 26") vorgesehen ist.

13. Friktions-Rollen-Transportbahn nach Anspruch 12, dadurch gekennzeichnet, daß die Einrichtung zum Spannen des Riemens (26, 26', 26") ein Rostastab bzw. ein Rostaelement (40, 42) ist.

14. Friktions-Rollen-Transportbahn nach Anspruch 13, dadurch gekennzeichnet, daß durch das Rostaelement (40, 42) ein ungefähr in der Achse der Rollenantriebswelle (14, 14', 14") liegendes Riemenrad (34, 34', 34") verstellbar ist.

Fig. 1

½

0084181

0084181

Fig.2

Fig.3

| EINSCHLÄGIGE DOKUMENTE | | - | EP 82112103.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | WO - A1 - 81/703 (ERMANCO INCOR-PORATED) (19-03-1981) .<br><br>* Fig. 1-3 *<br><br>---- | 1,2,4,<br>5,6 | B 65 G 13/07 |

RECHERCHIERTE
SACHGEBIETE (Int. Cl. ³)

B 65 G 13/00

Der vorliegende Recherchenbericht wurde für alle Patentansprüche erstellt.

| Recherchenort | Abschlußdatum der Recherche | Prüfer |
|---|---|---|
| WIEN | 20-04-1983 | PISSENBERGER |